# EUROPEAN PATENT APPLICATION

(11) **EP 2 299 745 A1**
(43) Date of publication of application: **23.03.2011**
(21) Application number: 09802414.4
(22) Date of filing: 28.07.2009
(51) Int. Cl.: H04W 4/14

(54) **METHOD, DEVICE AND SYSTEM FOR SENDING SHORT MESSAGE**

(30) Priority: 01.08.2008 CN 200810029937
(71) Applicant: Huawei Technologies Co., Ltd., Longgang District, Shenzhen Guangdong 518129 (CN)
(72) Inventor: HE, Chaoqun, Shenzhen 518129 (CN); MU, Dazhi, Shenzhen 518129 (CN); ZHANG, Feng, Shenzhen 518129 (CN); HOU, Xiaolong, Shenzhen 518129 (CN)
(74) Representative: Kreuz, Georg Maria
(86) International application number: PCT/CN2009/072955
(87) International publication number: WO 2010/012221

(57) **Abstract**

A method for sending short messages includes: obtaining a message submitted by a calling user, where the submitted message includes called user information and a short message content; converting the short message content in the submitted message into a voice content, and establishing a call connection with the called user according to the called user information in the submitted message; and notifying the called user of the voice content in the form of voice. Another method for sending short messages, a short message service center (SMSC), a call notification device, and a system for sending short messages are also provided. With the present invention, the call notification device obtains the submitted message from the SMSC, calls the called user according to the submitted message, and notifies the called user of the short message content in the form of voice. In this way, it can be avoided that short messages are lost when the memory in the mobile terminal of the called user is full, and thus the success ratio of sending short messages is increased and the requirements of operators and users is satisfied.

## Description

This application claims priority to Chinese Patent Application No. 200810029937.6, filed with the Chinese Patent Office on August 1, 2008 and entitled "Method, Device, and System for Sending Short Messages", which is incorporated herein by reference in its entirety.

### FIELD OF THE INVENTION

The present invention relates to the field of communications technologies, and in particular, to a method, a device and a system for sending short messages.

### BACKGROUND OF THE INVENTION

With the popularity of short message applications, the success ratio of sending short messages is an important index for assessing operators. Current statistic data shows that the general success ratio of sending short messages by a mobile terminal is only 95%. The success ratio is even 60% to 70% within some time segments or under some conditions or some applications, resulting in low reliability in sending short messages. Thus, how to maximize the success ratio of sending short messages is an important concern to equipment suppliers and mobile operators.

In the prior art, in the case of a network error or congestion of a short message transmission channel, for example, failure to send a short message due to rejection by the mobile switching center (MSC) or rejection by the home location register (HLR), the short message service center (SMSC) may roughly process the transmission of the short message according to its own scheduling configuration to increase the success ratio of sending short messages. For example, the SMSC retransmits a short message every two hours, with the maximum number of retransmissions equal to 10. If the SMSC still fails to send the short message after 10 attempts, it deletes the short message.

The prior art has the following disadvantages: In the case of failure to send short messages due to a fault of network equipment in a short message transmission channel or some specific causes (for example, the memory of the mobile terminal is full or the user terminal is faulty) of the user terminal, the current policy cannot solve the problem, and the success ratio of sending short messages may not be increased, thus causing inconvenience to users and even resulting in serious losses.

### SUMMARY OF THE INVENTION

The present invention provides a method for sending short messages, an SMSC, a call notification device, and a system for sending short messages to improve the success ratio of sending short messages and satisfy the requirements of operators and users.

To achieve the above technical effect, according to the first aspect of the present invention a method for sending short messages includes:
obtaining, by a call notification device, from an SMSC a message submitted by a calling user, where the submitted message includes called user information and a short message content;
converting the short message content in the submitted message into a voice content, and establishing a call connection with a called user according to the called user information in the submitted message; and
notifying the called user of the voice content in the form of voice.

According to the second aspect of the present invention a method for sending short messages includes:
obtaining a message, submitted by a calling user through a calling terminal, where the submitted message includes called user information and a short message content;
sending the short message content to a called user through a short message channel; and
confirming whether the short message content fails to be sent, and if it is confirmed that the short message content fails to be sent, sending the message submitted by the calling user to a call notification device.

According to the third aspect of the present invention a short message service center (SMSC) includes:
a first obtaining module, configured to obtain a message submitted by a calling user, where the submitted message includes called user information and a short message content;
a confirming module, configured to confirm whether the submitted message needs to be converted into a voice content for being notified to the called user, and if it is confirmed that the submitted message needs to be converted into a voice content, trigger a sending module to send the submitted message to a call notification device; and
the sending module, configured to send the submitted message obtained by the first obtaining module to the call notification device.

According to the fourth aspect of the present invention a call notification device includes:
a second obtaining module, configured to obtain, from an SMSC, a submitted message, where the submitted message includes called user information and a short message content;
a voice converting module, configured to convert the short message content in the submitted message obtained by the second obtaining module into a voice content;
a call connecting module, configured to establish a call connection with a called user according to the called user information in the submitted message obtained by the second obtaining module; and
a voice notifying module, configured to notify the called user of the voice content converted by the voice converting module after the call connecting module establishes the call connection successfully.

According to the fifth aspect of the present invention a system for sending short messages includes:
an SMSC, configured to: obtain a message, submitted by a calling user through a calling terminal, and send the submitted message to a call notification device, where the submitted message includes called user information and a short message content; and
the call notification device, configured to: receive the submitted message from the SMSC, convert the short message content in the submitted message into a voice content, establish a call connection with a called user according to the called user information in the submitted message, and notify the called user of the voice content.

According to the present invention, the call notification device obtains the message submitted by the calling user from the SMSC, calls the called user according to the submitted message, and notifies the called user of the short message content in the form of voice. In this way, it can be avoided that short messages are lost when the memory in the mobile terminal of the called user is full, and thus the success ratio of sending short messages is increased and the requirements of operators and users is satisfied.

### BRIEF DESCRIPTION OF THE DRAWINGS

To make the technical solution of the present invention clearer, the accompanying drawings for illustrating the embodiments of the present invention are briefly described below. Evidently, the accompanying drawings are exemplary only, and those skilled in the art can derive other drawings from such accompanying drawings without any creative effort.
FIG. 1 shows a structure of a system for sending short messages according to an embodiment of the present invention;
FIG. 2 shows a structure of an SMSC according to an embodiment of the present invention;
FIG. 3 shows a structure of a call notification device according to an embodiment of the present invention;
FIG. 4 shows a structure of an SMSC according to another embodiment of the present invention;
FIG. 5 is a flowchart of a method for sending short messages according to an embodiment of the present invention; and
FIG. 6 is a flowchart of a method for sending short messages according to another embodiment of the present invention.

### DETAILED DESCRIPTION OF THE EMBODIMENTS

The technical solution of the present invention is hereinafter described in detail with reference to the accompanying drawings. Apparently, the embodiments are exemplary only and the present invention is not limited to such embodiments. Other embodiments that those skilled in the art obtain based on embodiments of the present invention also fall within the scope of protection of the present invention.

Embodiments of the present invention provide a method for sending short messages, an SMSC, a call notification device, and a system for sending short messages, so that the short message content is notified to a user in the form of voice, thus increasing the success ratio of sending short messages and satisfying the requirements of operators and users.

The embodiments of the present invention are hereinafter described in detail with reference to the accompanying drawings.

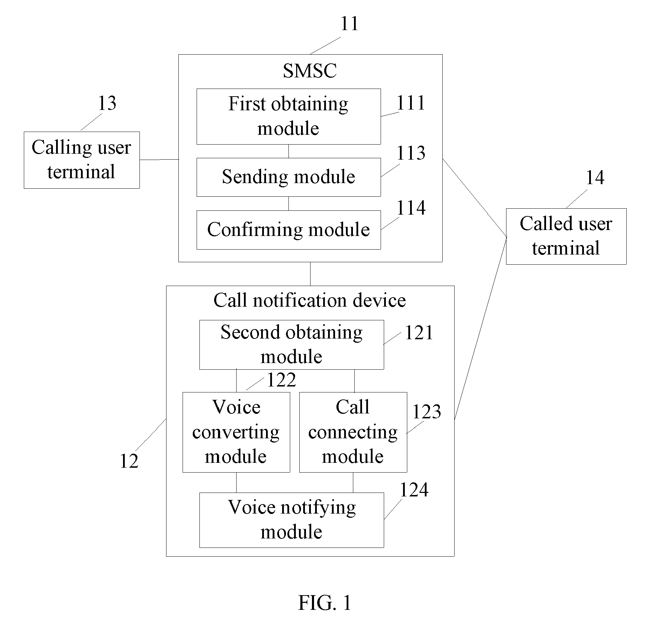

FIG. 1 shows a structure of a system for sending short messages according to an embodiment of the present invention. The system includes an SMSC 11 and a call notification device 12 that can communicate with a calling user terminal 13 and a called user terminal 14.

The SMSC 11 is configured to: obtain a message, submitted by a calling user through the calling terminal, and send the submitted message to the call notification device 12, where the submitted message includes called user information and a short message content. The SMSC 11 may send the obtained submitted message to the call notification device 12 in the case of failure to send the short message through a data channel.

The call notification device 12 is configured to: receive the submitted message from the SMSC 11, convert the short message content in the submitted message into a voice content, establish a call connection with the called user according to the called user information in the submitted message, and notify the called user of the voice content.

As shown in FIG. 1, the SMSC 11 includes a first obtaining module 111, a sending module 113, and a confirming module 114.

The first obtaining module 111 is configured to obtain the message submitted by the calling user, where the submitted message includes the called user information and short message content. Specifically, when the calling user terminal 13 needs to send a short message to the called user terminal 14, the calling user terminal 13 sends the submitted message that includes the called user information and short message content to the MSC; the SMSC 11 obtains the submitted message from the MSC.

The confirming module 114 is configured to confirm whether the submitted message needs to be converted into a voice content for being notified to a called user, and if it is confirmed that the submitted message needs to be converted into a voice content, trigger the sending module 113 to send the submitted message to the call notification device 12.

The sending module 113 is configured to send the submitted message obtained by the first obtaining module 111 to the call notification device 12.

Specifically, the step of confirming, by the confirming module 114, whether the submitted message needs to be converted into a voice content for being notified to a called user may include: confirming whether the short message fails to be sent through a short message channel, and if it is confirmed that the short message fails to be sent through a short message channel, affirming that the submitted message needs to be converted into a voice content for being notified to a called user. Certainly, the short message content may be notified to the called user in the form of voice according to user customization. The step of confirming whether the short message fails to be sent through the short message channel includes the following:

After the SMSC 11 sends a short message to the called user terminal 14, the SMSC 11 receives a failure response returned from the called user terminal 14; the confirming module 114 confirms that the short message fails to be sent through the short message channel, and triggers the sending module 113 to send the submitted message.

Or, after the SMSC 11 sends a short message to the called user terminal 14 and receives a failure response returned from the called user terminal 14, the SMSC 11 executes a local scheduling policy. For example, the SMSC 11 retransmits the short message to the called user terminal 14 every two hours, with the maximum number of retransmissions equal to 10. If the SMSC 11 still fails to send the short message after 10 attempts, the confirming module 114 confirms that the short message fails to be sent through the short message channel, and triggers the sending module 113 to send the submitted message.

In this embodiment, the call notification device 12 includes:
a second obtaining module 121, configured to obtain, from the SMSC 11, the submitted message, where the submitted message includes the called user information and short message content;
a voice converting module 122, configured to convert the short message content in the submitted message obtained by the second obtaining module 121 into a voice content;
a call connecting module 123, configured to establish a call connection with the called user according to the submitted message obtained by the second obtaining module 121; and
a voice notifying module 124, configured to notify the called user of the voice content converted by the voice converting module 122, after the call connecting module 123 establishes the call connection successfully.

Specifically, after the called user terminal 14 connects the call initiated by the call connecting module 123, the called user terminal 14 may listen to the voice information played by the voice notifying module 124, for example, "The calling user terminal A (which may be the phone number of the calling user terminal 13) sent a short message to you at 18:30. The short message content is: Will you go back home for supper? That is the end of the short message." It should be noted that the call content may include but is not limited to the address of the calling user, time of the short message, and content of the short message.

In this embodiment, the call notification device 12 obtains, from the SMSC 11, the submitted message, calls the called user, and sends the short message content in the form of voice. In this way, it can be avoided that short messages are lost when the memory in the mobile terminal of the called user is full, and thus the success ratio of sending short messages is increased and the requirements of operators and users is satisfied.

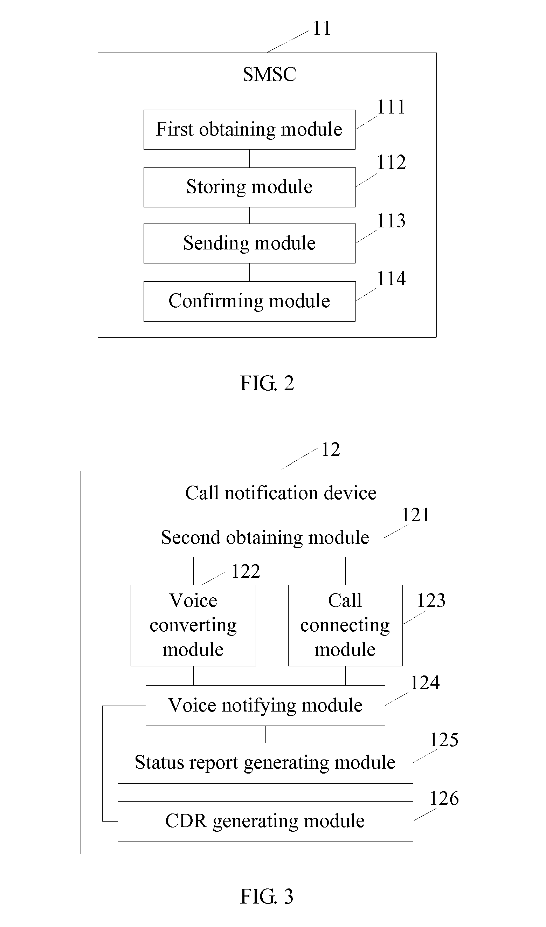

The following further describes the structure of the SMSC 11 according to an embodiment of the present invention with reference to FIG. 2. The SMSC 11 includes a storing module 112 besides the foregoing first obtaining module 111, the confirming module 114, and the sending module 113, where the storing module 112 is configured to: store the submitted message obtained by the first obtaining module 111; when the confirming module 114 confirms that the submitted message needs to be sent in the form of voice, trigger the sending module 113 to send the submitted message to the call notification device 12.

The following further describes the structure of the call notification device 12 according to an embodiment of the present invention with reference to FIG. 3. The call notification device 12 further includes the following modules besides the foregoing second obtaining module 121, the voice converting module 122, the call connecting module 123, and the voice notifying module 124:
a status report generating module 125, configured to generate a status report corresponding to the notification of the voice content after the voice notifying module 124 completes the notification; and
a CDR generating module 126, configured to generate a call detail record (CDR) for the notification of the voice content after the voice notifying module 124 completes the notification.

Specifically, the call notification device 12 may be an interactive voice response (IVR) device or an unstructured supplementary services data (USSD) device.

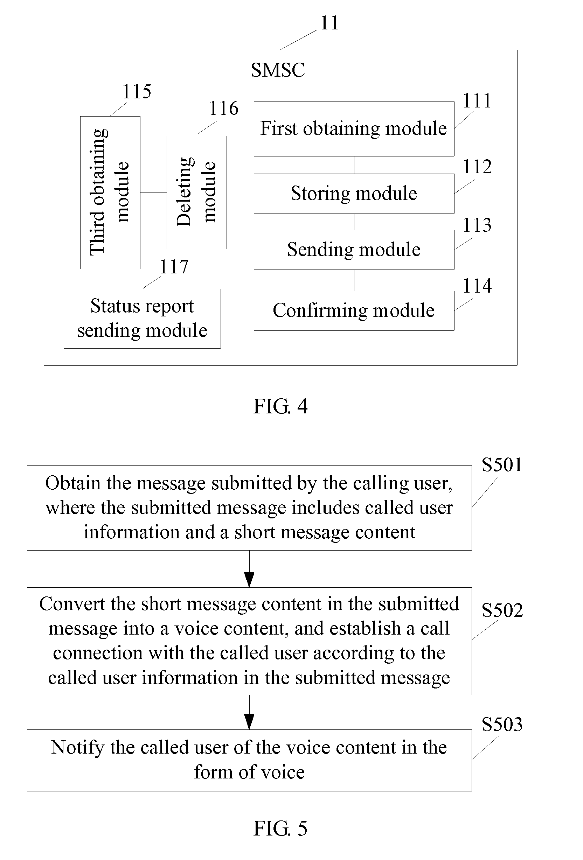

The following further describes the structure of the SMSC 11 in this embodiment with reference to FIG. 4. The SMSC 11 further includes the following modules besides the first obtaining module 111, the storing module 112, the sending module 113, and the confirming module 114:
a third obtaining module 115, configured to obtain a status report generated by the call notification device 12;
a deleting module 116, configured to delete, according to the obtained status report, the submitted message stored in the storing module 112; and
a status report sending module 117, configured to send the status report to the calling user when the calling user requests the status report.

FIG. 5 is a flowchart of a method for sending short messages according to an embodiment of the present invention. The method includes the following steps:
Step S501: Obtain the message submitted by the calling user, where the submitted message includes called user information and a short message content.

Specifically, when the calling user needs to send a short message to the called user, the calling user terminal submits message that includes the called user information and short message content to the SMSC, and the call notification device obtains, from the SMSC, the message submitted by the calling user.

Step S502: Convert the short message content in the submitted message into a voice content, and establish a call connection with the called user according to the called user information in the submitted message.

Specifically, the call notification device obtains, from the SMSC, the submitted message, and establishes a call connection with the called user according to the called user information in the submitted message.

Step S503: Notify the called user of the voice content in the form of voice.

Specifically, when the called user is connected successfully, the called user may listen to the voice information played by the call notification device, for example, "User terminal A (which may be the phone number of the user terminal) sent a short message to you at 18:30. The short message content is: Will you go back home for supper? That is the end of the short message." It should be noted that the call content may include but is not limited to the address of the calling user, time of the short message, content of the short message.

In this embodiment, the call notification device obtains, from the SMSC, the submitted message, calls the called user according to the submitted message, and notifies the called user of the short message content in the form of voice. In this way, it can be avoided that short messages are lost when the memory in the mobile terminal of the called user is full, and thus the success ratio of sending short messages is increased and the requirements of operators and users is satisfied.

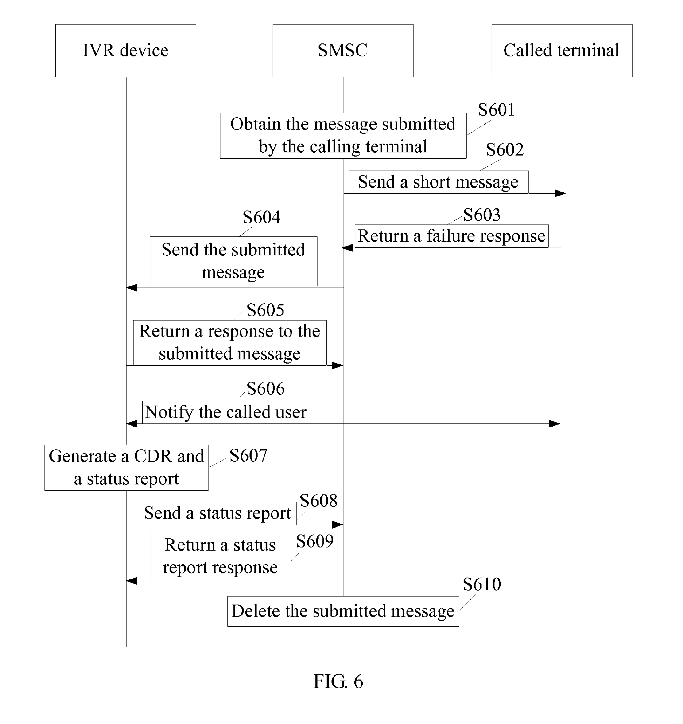

The following further describes the method for sending short messages according to another embodiment of the present invention with reference to FIG. 6. In this embodiment, the call notification device is an IVR device. The method includes the following steps:
Step S601: The SMSC obtains the message submitted by the calling terminal.

Specifically, the submitted message includes called user information and a short message content.

Step S602: The SMSC sends a short message to the called terminal.

Step S603: The called terminal returns a failure response.

Specifically, the failure response includes a failure cause. In this embodiment, the failure cause is assumed to be that the memory in the called terminal is full.

Step S604: The SMSC sends the submitted message to the IVR device.

Specifically, after receiving the failure response returned from the called terminal, the SMSC confirms that the short message fails to be sent through the short message channel, and sends the submitted message to the IVR device; or after receiving the failure response returned from the called terminal, the SMSC executes a local scheduling policy. If the SMSC is preconfigured to execute a scheduling policy when the short message fails to be sent because the memory in the called terminal is full, the scheduling policy is: retransmitting the short message every two hours. In this case, the SMSC schedules the retransmission, and retransmits the short message after the retransmission interval (two hours in this embodiment) expires; if the SMSC receives a failure response again from the called terminal, the SMSC confirms that the short message fails to be sent through the short message channel, and sends the submitted message to the IVR device.

Step S605: The IVR device returns a response corresponding to the submitted message.

Step S606: The IVR device calls the called terminal according to the called user information (for example, the address of the called user) in the submitted message, and notifies the called user of the short message content in the submitted message in the form of voice after the call connection succeeds.

Specifically, the IVR device needs to convert the short message content in the submitted message, and notifies the called user of the voice content in the form of voice after the call connection succeeds, where the notification content may include but is not limited to the address of the calling user, time of the short message, and content of the short message.

Step S607: After the IVR device completes the call connection, the IVR device generates a CDR and a status report.

Specifically, the status report indicates that the call notification succeeds, that is, the short message content is notified to the called user successfully.

Step S608: The IVR device sends a status report to the SMSC.

Step S609: The SMSC returns a status report response.

Step S610: The SMSC deletes the submitted message according to the status report, and generates a statistic CDR, where the statistic CDR includes the information indicating that the IVR device establishes the call connection successfully.

Step S602 and step S603 are a method used by the SMSC to confirm whether the message submitted by the calling user needs to be converted into a voice content for being notified to the called user. Certainly, the SMSC may also confirm whether the message submitted by the calling user needs to be converted into a voice content for being notified to the called user according to the user customization or other policies.

Specifically, when the calling user requests the status report, the SMSC sends a status report to the MSC, and the MSC sends the status report to the calling terminal.

The method for notifying the short message content includes but is not limited to the IVR voice call method. Other methods such as the USSD method may also be available so long as the short message content can be notified to the user.

It is understandable by those skilled in the art that the method for sending short messages may be implemented by a computer program, a command or a programmable logical device. The program may be stored in a storage medium, such as a compact disk-read only memory (CD-ROM) and a magnetic disk.

In embodiments of the present invention, the call notification device obtains, from the SMSC, the submitted message, calls the called user according to the submitted message, and notifies the called user of the short message content in the form of voice. In this way, it can be avoided that short messages are lost when the memory in the mobile terminal of the called user is full, and thus the success ratio of sending short messages is increased and the requirements of operators and users is satisfied.

Although the technical solution of the present invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall within the scope of protection defined by the claims or their equivalents.

## Claims

1. A method for sending short messages, comprising:
obtaining, by a call notification device, from a short message service center (SMSC) a message submitted by a calling user, wherein the submitted message comprises called user information and a short message content;
converting the short message content in the submitted message into a voice content, and establishing a call connection with a called user according to the called user information in the submitted message; and
notifying the called user of the voice content in the form of voice.

2. The method of claim 1, comprising:
sending, by the SMSC, the short message content to the called user through a short message channel; and
confirming whether the short message content fails to be sent, and if the SMSC is confirmed that short message content fails to be sent, sending the submitted message to the call notification device.

3. The method of claim 1 or 2, wherein after the process of notifying the called user of the voice content in the form of voice, the method further comprises:
generating a status report of the voice notification to notify the SMSC of deleting the submitted message.

4. The method of any one of claims 1 to 3, wherein after the process of notifying the called user of the voice content in the form of voice, the method further comprises: generating a call detail record (CDR) of the voice notification.

5. The method of any one of claims 1 to 4, wherein the process of notifying the called user of the short message content in the submitted message in the form of voice may be implemented in an interactive voice response (IVR) mode or in an unstructured supplementary services data (USSD) mode.

6. A method for sending short messages, comprising:
obtaining a message, submitted by a calling user through a calling terminal, wherein the submitted message comprises called user information and a short message content; and
confirming whether the submitted message needs to be converted into a voice content for being notified a called user, and if it is confirmed that the submitted message needs to be converted into a voice content, sending the message submitted by the calling user to a call notification device.

7. The method of claim 6, wherein the process of confirming whether the submitted message needs to be converted into the voice content for being notified to the called user comprises:
sending the short message content to the called user through a short message channel; and
confirming whether the short message content fails to be sent, and if it is confirmed that the short message content fails to be sent, affirming that the submitted message needs to be converted into the voice content for being notified to the called user.

8. The method of claim 6 or 7, further comprising:
obtaining a status report sent by the call notification device; and
deleting the submitted message according to the status report.

9. The method of any one of claims 6 to 8, further comprising:
sending the status report to the calling user when the calling user requests the status report.

10. A short message service center (SMSC), comprising:
a first obtaining module, configured to obtain a message submitted by a calling user, wherein the submitted message comprises called user information and a short message content;
a confirming module, configured to confirm whether the submitted message needs to be converted into a voice content for being notified to a called user, and if it is confirmed that the submitted message needs to be converted into a voice content, trigger a sending module to send the submitted message to a call notification device; and
the sending module, configured to send the submitted message obtained by the first obtaining module to the call notification device.

11. The SMSC of claim 10, further comprising:
a storing module, configured to store the submitted message obtained by the first obtaining module.

12. The SMSC of claim 11, further comprising:
a third obtaining module, configured to obtain a status report generated by the call notification device; and
a deleting module, configured to delete, according to the obtained status report, the submitted message stored in the storing module.

13. The SMSC of any of claims 10 to 12, further comprising:
a status report sending module, configured to send the status report to the calling user when the calling user requests the status report.

14. A call notification device, comprising:
a second obtaining module, configured to obtain, from a short message service center (SMSC), a submitted message;
a voice converting module, configured to convert a short message content in the submitted message obtained by the second obtaining module into a voice content;
a call connecting module, configured to establish a call connection with a called user according to the called user information in the submitted message obtained by the second obtaining module; and
a voice notifying module, configured to notify the called user of the voice content converted by the voice converting module after the call connecting module establishes the call connection successfully.

15. The call notification device of claim 14, further comprising:
a status report generating module, configured to generate a status report corresponding to notification of the voice content after the voice notifying module completes the notification;
a status report sending module, configured to send the status report generated by status report generating module to the SMSC; and
a CDR generating module, configured to generate a call detail record (CDR) for the notification of the voice content after the voice notifying module completes the notification.

16. A system for sending short messages, comprising:
a short message service center (SMSC), configured to: obtain a message, submitted by a calling user through a calling terminal, and sending the submitted message to a call notification device, wherein the submitted message comprises called user information and a short message content; and the call notification device, configured to: receive the submitted message from the SMSC, convert the short message content in the submitted message into a voice content, establish a call connection with a called user according to the called user information in the submitted message, and notify the called user of the voice content.

17. The system of claim 16, wherein the call notification device is an interactive voice response (IVR) device or an unstructured supplementary services data (USSD) device.
